# DEMANDE DE BREVET EUROPEEN

(11) **EP 3 794 948 A1**
(43) Date de publication de la demande: **24.03.2021**
(21) Numéro de dépôt: 20195439.3
(22) Date de dépôt: 10.09.2020
(51) Int. Cl.: A23B 7/148, A23L 3/3418

(54) **MÉTHODE DE STOCKAGE DE PRODUITS ALIMENTAIRES FRAIS**

(30) Priorité: 17.09.2019 FR 1910263
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: AVILES, Carlos, 78350 Les Loges-En-Josas (FR); IBARRA, Dominique, 78350 Les Loges-En-Josas (FR); COMBE, Charlotte, 75321 PARIS CEDEX 07 (FR); LLEDOS, Bernard, 78350 Les Loges-En-Josas (FR)
(74) Mandataire: Air Liquide

(57) **Abrégé**

Procédé de conservation de produits alimentaires frais, selon lequel on dispose d'un système de création d'une enveloppe autour de chaque palette/support (P) chargé(e) en produits, système localisé au sein d'une chambre de stockage destinée à stocker les produits, se caractérisant en ce que le système de création d'une enveloppe met en oeuvre les moyens suivants :
- le système de création d'une enveloppe comprend au moins une station (S), localisée au sein de la chambre de stockage destinée à stocker les produits, station qui comprend une enveloppe (E) (préférentiellement réutilisable) et qui comprend des moyens, automatiques ou manuels, pour abaisser l'enveloppe sur une palette/support chargé en produits et remonter l'enveloppe sur demande, par exemple pour permettre l'accès aux produits stockés sur la palette/support considéré(e);
- le système comprend des moyens permettant de balayer l'enceinte hermétique ainsi créée à l'intérieur de l'enveloppe avec un mélange de gaz choisi adapté pour la conservation des produits concernés.

## Description

La présente invention concerne le domaine de l'agroalimentaire.

Le marché de l'agroalimentaire est en pleine mutation. Les consommateurs affichent aujourd'hui une volonté de consommer de plus en plus de produits frais, qui sont associés à la notion de vitalité, de bien-être et de santé.

Cette tendance est également renforcée par une perte de confiance dans les produits transformés (« processés ») par l'industrie agroalimentaire, due en particulier aux différents scandales alimentaires qui se sont succédés ces dernières années (on citera les cas bien connus des lasagnes à la viande de cheval, des œufs et viandes contaminés etc...). Être sûr de l'innocuité d'un aliment ou estimer que ce dernier a des effets positifs pour la santé sont même devenus des critères de qualité, qui, à eux deux, dépassent celui de sa simple dimension gustative. Le « frais » est ainsi devenu un marché à part entière, en témoignent le succès des enseignes spécialisées dans le frais apparues ces dernières années, ou encore les entreprises de livraison de produits frais dont le développement est spectaculaire.

Mais si les consommateurs veulent manger frais, 82% d'entre eux sont aujourd'hui insatisfaits de la qualité des fruits et légumes qu'ils achètent en grande et moyenne surface de distribution. Ces clients notent tout particulièrement le manque de goût et de maturité des produits, la présence de produits abîmés sur les étals et leur courte durée de vie.

De leur côté, les enseignes de distribution éprouvent de réelles difficultés à conserver les fruits et légumes et font ainsi face à une véritable problématique de gaspillage des denrées invendues car trop abîmées (les hypermarchés français perdent aujourd'hui par site jusqu'à 1.6M€ par an de fruits et légumes, dont 20% de fruits rouges) à laquelle s'ajoute une perte de clientèle, au profit notamment des enseignes spécialisées dans le frais.

Le stockage long dans les chambres froides des magasins (on parle aussi d'entrepôts réfrigérés, de chambres froides, de chambres de stockage, ou encore d'entrepôts de stockage) a un impact prépondérant sur la qualité des fruits et légumes. En effet, les fruits et légumes passent jusqu'à la moitié de leur vie dans ces chambres/entrepôts dans lesquelles les conditions de conservation ne sont pas adaptées aux besoins spécifiques de chaque produit. Les chambres de stockage génèrent :
- une température théorique unique non adaptée pour l'ensemble des produits,
- une température réelle hétérogène dans l'espace (gradient de température dans la chambre) et dans le temps (variations journalières, qui accélèrent l'évolution naturelle des produits),
- d'autres paramètres impactant la conservation des fruits et légumes ne sont pas contrôlés (e.g. hygrométrie, composition de l'atmosphère, concentration en éthylène, lumière).

Tous les fruits et légumes présentent des paramètres optimaux de conservation, distincts. Les chambres de stockage des fruits et légumes frais dans les enseignes de distribution ne sont ainsi pas adaptées et encore moins optimales pour la conservation des fruits et légumes frais qu'elles contiennent et nécessitent d'être optimisées. La seule solution actuellement développée dans les zones de stockage est un contrôle de la température, qui est unique, et non adaptée aux besoins spécifiques de chaque fruit et légume.

Les solutions de stockage de fruits et légumes sur palettes, connues dans cette industrie, et présentées ci-dessous, sont utilisées uniquement en amont de la chaîne et ne sont pas adaptées pour les magasins :
- les palettes en chambres sous atmosphère contrôlée : solution non modulable en volume, taille et en géométrie, d'avantage réservée aux « mono-produits » (pour des multi-produits une seule composition gazeuse pour l'ensemble des fruits et légumes se révèle inadaptée aux besoins spécifiques de chaque produit), et peu pratique (obligation de remettre l'ensemble du lieu (chambre) de stockage sous air pour récupérer une partie des produits stockés).
- le MAP (emballage sous atmosphère modifiée) sur palette : emballages plastique ou housses de conservation autour des produits sur la palette, cette solution ici encore manque de praticité pour la récupération de quelques cagettes sur la palette : obligation de défaire l'ensemble de la housse/du film et de repositionner la housse après récupération, ce qui représente un processus très long.
- les cellules à atmosphère contrôlée qui sont de très petite taille, et donc inadaptées pour les magasins en grande ou moyenne surface.

Un des objectifs de la présente invention est alors de proposer une solution aux problématiques évoquées ci-dessus, qui soit modulable, pratique et automatisée, de contrôle des paramètres environnementaux (tels que la composition atmosphérique, la température, l'hygrométrie, ou encore la concentration en éthylène) solution pouvant fonctionner pour une palette ou un groupe de palettes stockées dans une chambre de stockage , mais d'autres supports peuvent être utilisés y compris le fait de faire reposer les produits au sol.
Les différents produits peuvent être regroupés à l'intérieur de la solution selon leurs paramètres optimaux de conservation. De par son automatisation, la solution est flexible et permet d'accéder aux différentes cagettes de manière sécurisée, tout en reconditionnant la palette rapidement, et ce autant de fois que nécessaire, sans perte de temps.

Comme on le verra plus en détails dans ce qui suit, la présente invention propose l'utilisation de systèmes de housses ou hottes ou enveloppes amovibles et facilement repositionnables (on peut aussi parler de « chaussettes ») de conservation dans les chambres de stockage, par exemple réfrigérées, permettant de gérer de manière spécifique la température, la composition atmosphérique mais aussi d'autres paramètres environnementaux (tels que l'hygrométrie ou la concentration en éthylène.

Les avantages d'une telle proposition technique peuvent être résumés ainsi :
- Maintien des qualités organoleptiques, nutritionnelles et sanitaires des produits
- Développement sur mesure de la solution la plus adaptée aux besoins
- Modularité, individualisation des conditions de stockage pour chaque palette dans une seule et même chambre de stockage,
- Souplesse d'utilisation et praticité pour les employés (limitation des contraintes d'opérabilité),
- Amélioration de la sécurité liée aux gaz pour accéder aux cagettes,
- Limitation des contraintes au sol.

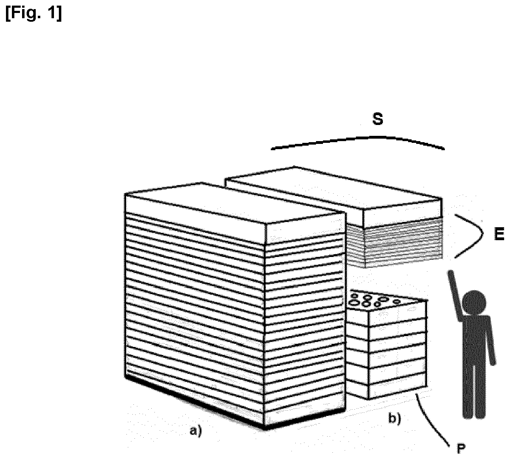

[Fig. 1] annexée fournit une représentation schématique d'un exemple de tel dispositif et de son fonctionnement, que l'on peut résumer ainsi :
- la vue a) sur la figure représente la situation où la hotte (ou housse) (E) est positionnée enfilée/abaissée sur la palette (P), tandis que la vue b) sur la figure représente la situation où la hotte (E) a été relevée.
- on place une palette (P) contenant les produits sous la hotte/chaussette (E) qui est en position haute.
- on sélectionne sur un boitier (Interface Homme Machine) de la station (S) le ou les produits (fruits, légumes...) à conserver ou le mélange gazeux optimal pour chacun des produits (« recette »).
- on abaisse la hotte autour de la palette.
- une fois la hotte en position basse, on injecte un mélange de gaz choisi (par exemple un mélange O2/CO2/N2), spécifiquement adapté pour la conservation des fruits et légumes concernés. Cela permet de modifier l'atmosphère de l'enceinte hermétique formée par la housse.
- l'injection est contrôlée par exemple par un détendeur ainsi qu'une vanne de régulation et est réalisée préférentiellement par le bas de la structure. Le balayage repose sur un effet piston. Dans le même temps, l'air est aspiré localement par le haut de la structure pour éviter toute surpression dans la hotte de stockage. Une vanne de surpression peut également être installée pour éviter toute surpression ou dépression dans l'enceinte.
- au cours d'une phase de stockage, on organise préférentiellement le fait que le système régule automatiquement tous les paramètres pour compenser les changements de l'environnement de conservation découlant de la respiration des fruits et légumes. Pour cela la hotte est avantageusement équipée d'analyseurs de gaz (tels O₂ et/ou CO₂) et d'hygrométrie, ainsi que d'une sonde de température.
- quand un opérateur a besoin d'accéder à une palette, il appuie sur un actionneur pour déclencher le remplacement de l'atmosphère protectrice dans la hotte abaissée par de l'air ambiant. L'air purgé est ensuite soufflé en extérieur. La hotte est ensuite par exemple automatiquement relevée quand les seuils gazeux de sécurité sont atteints.
- une fois qu'il a terminé son intervention sur la palette, l'opérateur appui à nouveau sur l'actionneur pour recommencer le processus d'abaissement et de mise sous atmosphère adéquate.

Grâce à ce système, une large part des équipements (hottes, arrivées de gaz....) peuvent être fixés au plafond ou sur une structure (station) indépendante ergonomique. Ainsi, lorsque l'appareil n'est pas en utilisation, il n'encombre pas, et ne gêne pas pour le nettoyage ni pour les opérations des différents opérateurs. On parlera dans ce qui suit de « station », que cette station soit fixée au plafond de la chambre ou bien qu'elle soit indépendante et mobile au sein de la chambre.

Avantageusement, le logiciel de contrôle de la hotte contient plusieurs « recettes de conservation ». Une recette de conservation décrit typiquement le niveau optimum de chaque paramètre de stockage : mélange gazeux, température, hygrométrie. Pour faciliter l'utilisation de la chaussette par les employés, l'interface Homme Machine permet par exemple le choix de la recette en sélectionnant l'image correspondant au fruit ou au légume à stocker. Il est également possible de choisir directement une recette adaptée à un ensemble de différents fruits et légumes.

Une interface spécifique pour assurer le suivi des conditions dans les différentes enceintes peut être également proposée (suivis en temps réel de la composition de l'atmosphère, de la température et de l'hygrométrie). Il permet une facilité d'usage aux différents utilisateurs. De plus, l'interface Homme-machine permet d'afficher directement les conditions internes de l'enceinte et permet ainsi aux opérateurs d'avoir un accès facilité à l'information.

L'invention concerne alors un procédé de conservation de produits alimentaires frais, selon lequel les produits sont positionnés sur un support, par exemple sur une palette ou autre voire au sol, palettes/supports destiné(e)s une fois chargé(e)s à être stocké(e)s dans une chambre de stockage qui peut être réfrigérée, et où l'on dispose d'un système de création d'une enveloppe autour de chaque palette/support chargé en produits, système localisé au sein de la chambre de stockage, se caractérisant en ce que le système de création d'une enveloppe met en œuvre les moyens suivants :
- le système de création d'une enveloppe comprend au moins une station, localisée au sein de la chambre de stockage destinée à stocker les produits, station qui comprend une enveloppe (avantageusement réutilisable) et qui comprend des moyens, automatiques ou manuels, pour abaisser l'enveloppe sur une palette/support chargé en produits et remonter l'enveloppe sur demande, par exemple pour permettre l'accès aux produits stockés sur la palette/support;
- le système comprend des moyens permettant de balayer l'enceinte hermétique ainsi créée à l'intérieur de l'enveloppe avec un mélange de gaz choisi adapté pour la conservation des produits concernés.

Comme mentionné plus haut, il y a un état de la technique s'intéressant au fait de mettre en œuvre une atmosphère modifiée sur une palette via une enveloppe. Mais comme on l'aura compris à la lecture de ce qui précède, la présente invention s'attache à aller plus loin, et à proposer une solution modulable, pratique et automatisée. Pour cela, l'invention prévoit la mise en œuvre d'une station de création d'une enveloppe, station localisée au sein de la chambre de stockage, station qui comprend des moyens pour abaisser et relever l'enveloppe autant que nécessaire, et qui comprend des moyens de balayage de l'intérieur de l'enveloppe à l'aide d'un gaz adéquat.
Solution qui n'est pas évoquée ou suggéré par l'état de la technique.

On pourra par exemple examiner le document US-5 438 917A qui décrit un procédé de murissement de fruits stockés sur une palette, par mise en contact des fruits avec une atmosphère d'air refroidi, avec la présence d'une cloison (« partition »), enserrant les boites de fruits, cloison « n'admettant aucun air et étant fixée de manière étanche à une hotte d'aspiration.... ».
En aucune manière ce document ne décrit la présence d'une station d'actionnement du mouvement d'une enveloppe fluide, pour l'abaisser et la remonter autant que nécessaire autour de la palette, station comprenant de plus des moyens de balayage gazeux de l'intérieur de l'enveloppe.

Toujours à titre illustratif on pourra examiner le document WO2019/122603A1 (au nom de la Demanderesse) : Ici encore cet art antérieur montre l'existence de procédés et dispositifs antérieurs s'intéressant à la mise en place d'atmosphères contrôlées à l'intérieur d'enveloppes enserrant des palettes, mais ce document ne met pas en œuvre de station au sens de la présente invention, pour la gestion de l'enveloppe et de l'injection de gaz.

## Revendications

1. Procédé de conservation de produits alimentaires frais, selon lequel les produits sont positionnés sur un support, par exemple sur une palette (P) ou autre support voire au sol, palettes/supports destiné(e)s une fois chargé(e)s à être stocké(e)s dans une chambre de stockage qui peut être réfrigérée, et où l'on met en place autour de chaque palette/support chargé(e) en produits une enveloppe apte à recevoir en son intérieur une atmosphère de conservation des produits concernés, selon lequel on dispose d'un système de création d'une enveloppe autour de chaque palette/support chargé(e) en produits, système localisé au sein de la chambre de stockage, **se caractérisant par** la mise en œuvre des mesures suivantes :
- le système de création d'une enveloppe comprend au moins une station (S), localisée au sein de la chambre de stockage destinée à stocker les produits, station qui comprend une enveloppe (E) et qui comprend des moyens, automatiques ou manuels, pour abaisser l'enveloppe sur une palette/support chargé en produits et remonter l'enveloppe sur demande, par exemple pour permettre l'accès aux produits stockés sur la palette/support considéré(e);
- le système comprend des moyens permettant de balayer l'enceinte hermétique ainsi créée à l'intérieur de l'enveloppe avec un mélange de gaz choisi adapté pour la conservation des produits concernés.

2. Procédé selon la revendication 1, **se caractérisant en ce que** durant le balayage, l'air est aspiré par la station par le haut de la structure pour éviter toute surpression dans l'enceinte, et évacué vers l'extérieur.

3. Procédé selon la revendication 1 ou 2, **se caractérisant en ce que** l'on régule l'un ou plusieurs des paramètres suivants au cours d'une phase de stockage des produits sous une telle enveloppe : la teneur en oxygène dans l'enceinte interne à l'enveloppe, la teneur en CO₂ dans l'enceinte interne à l'enveloppe, l'hygrométrie dans l'enceinte interne à l'enveloppe, et la température dans l'enceinte interne à l'enveloppe.

4. Procédé selon l'une des revendications précédentes, **se caractérisant en ce que** lorsqu'il est nécessaire d'accéder aux produits stockés sur une palette sous enveloppe, on actionne, manuellement ou automatiquement, le remplacement par de l'air de l'atmosphère protectrice en vigueur dans l'enveloppe abaissée, air purgé qui est soufflé vers l'extérieur, puis l'on actionne, manuellement ou automatiquement, la remontée de l'enveloppe, par exemple quand des seuils gazeux de sécurité à l'intérieur de l'enveloppe sont atteints.

5. Procédé selon l'une des revendications précédentes, **se caractérisant en ce que** la station est munie d'un Interface Homme Machine qui comporte des recettes de conservation pour chaque produit ou catégorie de produits pouvant être stockés sur les palettes.

6. Installation de conservation de produits alimentaires frais, conservation au cours de laquelle les produits sont positionnés sur un support, par exemple sur une palette (P) ou autre support voire au sol, palettes/supports destiné(e)s une fois chargé(e)s à être stocké(e)s dans une chambre de stockage pouvant être réfrigérée, et où une enveloppe est installée autour de chaque palette/support chargé(e) en produits, installation comprenant un système de création d'une enveloppe (E) autour de chaque palette/support, système localisé au sein de la chambre de stockage, **se caractérisant en ce que** le système de création d'une enveloppe comporte les moyens suivants :
- le système de création d'une enveloppe comprend au moins une station (S), localisée au sein de la chambre destinée à stocker les produits, station qui comprend une enveloppe (E) et qui comprend des moyens, automatiques ou manuels, pour abaisser l'enveloppe sur une palette/support chargé(e) en produits et remonter l'enveloppe sur demande, par exemple pour permettre l'accès aux produits stockés sur la palette/support considéré(e);
- le système comprend des moyens permettant de balayer l'enceinte hermétique ainsi créée à l'intérieur de l'enveloppe avec un mélange de gaz choisi, adapté pour la conservation des produits concernés.
